# EUROPEAN PATENT SPECIFICATION

(11) **EP 1 722 126 B1**
(45) Date of publication and mention of the grant of the patent: **17.02.2010**
(21) Application number: 06009408.3
(22) Date of filing: 08.05.2006
(51) Int. Cl.: F16F 15/32, F16C 13/00

(54) **Method and apparatus for balancing a tubular piece, such as a roll**
Verfahren und Vorrichtung zum Auswuchten eines rohrförmigen Teiles, wie einer Rolle
Procédé et dispositif pour équilibrer une pièce tubulaire, comme un rouleau

(30) Priority: 11.05.2005 FI 20050499
(43) Date of publication of application: 15.11.2006
(73) Proprietor: Vaahto OY, 15860 Hollola (FI)
(72) Inventor: Kuusinen, Antti, 37830 Viiala (FI); Pullinen, Jukka, 33960 Pirkkala (FI); Salonen, Jari, 37830 Viiala (FI); Mattila, Jyrki, 37800 Toijala (FI)
(74) Representative: Laine, Terho Tapio

(56) References cited:
- DE-A1- 3 733 339
- JP-A- 10 196 737

## Description

### Background of the invention

The invention relates to a method according to the preamble of claim 1 for balancing a tubular piece, such as a roll.

The invention also relates to a device according to the preamble of claim 9 to be used in balancing a tubular piece.

Balancing methods are known from prior art in which an additional weight used in balancing is fastened on the internal surface of the tube part of a tubular piece intended for rotating, such as the shell of a roll. It is difficult to position a counterweight at a desired position and the adjustability of the counterweight is even impossible. From specification FI82856B, a solution is known in which, in the manufacturing stage of the roll, an annular rail is fastened by welding on the internal surface of the roll in which rail the counterweight is fastened. The utilisation of the solution of this specification is limited to new roll manufacturing and it may only be utilised in central balancing of the roll, whereby balancing occurs only on one plane. The narrow rail used in the solution of the specification stresses the dynamic deformations of the shell caused by the counterweight when a point-form force is applied to the shell. Additionally, a disadvantage of this known solution is that the fastening point or the fastening plane of the counterweight has been chosen beforehand, whereby, i n balancing, it is not possible to choose an optimal balancing plane in the longitudinal direction of the roll, i.e., the position of the balancing plane transverse in relation to the rotation axle of the roll in the direction of the axle. DE 3733339 A1 discloses a hollow roll for guiding web-shaped material with balancing weights which are attached to a holding device which extends in a radial plane of the roll and is mounted on the roll inner wall without damaging the roll wall. The holding device is formed by a plurality of circular parts which are distributed evenly along the roll inner wall and whose radius at the roll-wall side corresponds to the radius of the roll inner wall.

The object of this invention is to achieve a totally novel solution with which the disadvantages of known prior art are avoided. The object of the invention is thus to achieve a solution by means of which it is possible to balance tubular rotating pieces more flexibly than earlier, most suitably in a desired degree on the cross-section planes of the piece to be balanced. Another object of the invention is to achieve a balancing member which is more easily mounted into connection with the tubular piece.

### Brief description of the invention

It is principally characteristic for the method according to the invention that, the annular device comprises at least one first part and at least one second part, and means for arranging the first part and the second part pivotally to each other and a tightening means by means of which the annular device may be adjustable between a first position, in which the circle of the annular device is at its first length, and a second position in which the circle of the annular device is at its second length.

In addition, the method according to the invention is characterised by what is stated in claims 2-8.

It is characteristic for the apparatus according to the invention that the device is an annular device, tightenable against the internal surface of the shell part of a tubular piece, that the device comprises at least one first part and at least one second part, and means for arranging the first part and the second part pivotally to each other, and a tightening means by means of which the annular device may be adjustable between a first position, in which the circle of the annular device is at a first length, and a second position in which the circle of the annular device is at a second length.

In addition, the apparatus according to the invention is characterised by what is stated in claims 10-15.

The solution according to the invention has numerous significant advantages. The roll may be balanced by means of the method and the balancing means, i.e., the balancing ring according to the invention, in connection of both new manufacturing and roll refurbishing. A desired number of balancing rings may be mounted inside the roll for performing the balancing of several planes. Hence, the solution is not solely limited to the balancing of one plane. The ring is used for minimising the error of the longitudinal deflection curve of the roll. The structure of the device is multiple-part, most advantageously two-part, which enables mounting to rolls in which the inner diameter of the end of the shell is smaller than the one of the centre. Then, the parts of the device may be brought inside the roll shell separately and assembled inside the roll shell, most suitably near the end. According to an embodiment, the tightening element of the balancing means is most suitably based on a wedge, whereby the balancing means may be conveniently tightened to its place from outside the roll. Then, there is no need for the mounter to fit inside the roll. The use of a relatively wide ring decreases the dynamic deformations occurring in the shell. The structure is light and it does not change the natural frequency of the roll. The inner diameter of the roll shell does not restrict the use of the ring or mounting inside the shell. The ring is tightened inside the roll shell mechanically, with which it is ensured that the ring remains fastened regarding vibration, temporal wear and temperature changes. The balancing mass and its direction may be converted without unfastening the roll end.

### Brief description of the figures

In the following, the invention will be described in detail by means of an example with reference to the accompanying drawing, in which
Fig. 1 is a longitudinal cross-section of a rotatable tubular piece in which a device and a method according to the invention are used,

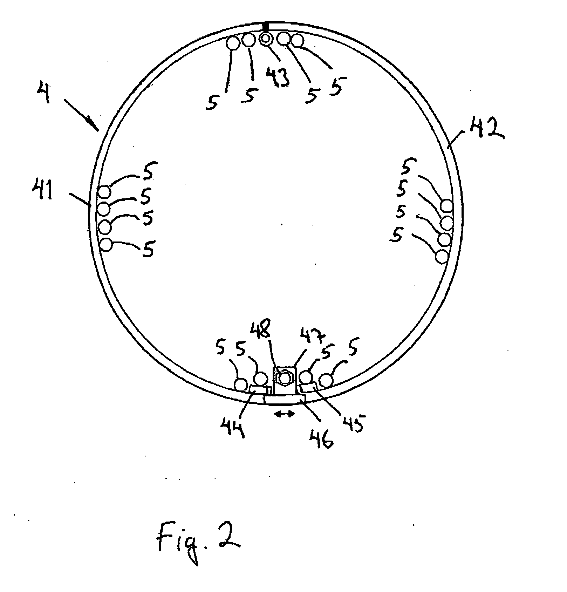

Fig. 2 shows a device according to the invention, and

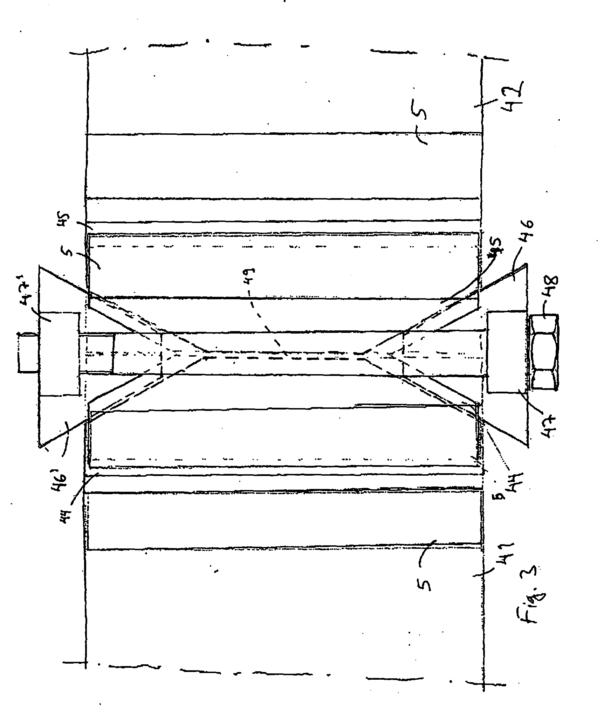

Fig. 3 shows an enlarged detail of a device according to the invention.

### Detailed description of the invention

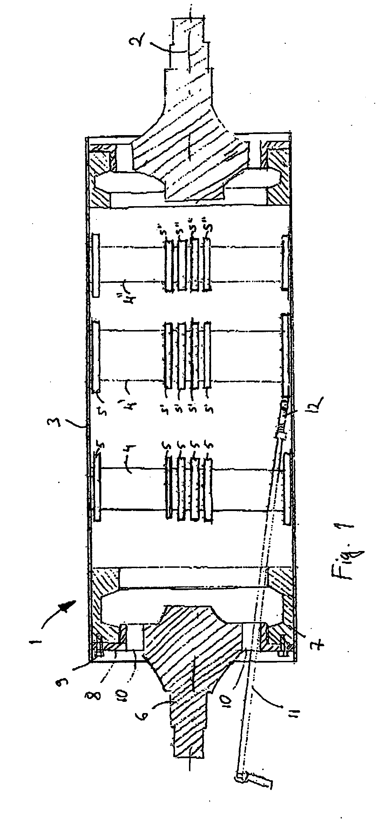

Fig. 1 shows a cross-section of a tubular piece 1 according to the invention intended for rotating. The piece comprises a cylindrical shell part 3 i.e. a roll shell. The piece is typically a roll. A longitudinal central axle 2 i.e. a rotation axle around which the roll 1 is rotated has been drawn to the figure with a dashed line. The central axle 2 travels via spindles 6 located at roll ends. The roll ends are typically flange-shaped parts 8. At least one opening 10 going through the flange has been formed at the roll ends. Typically, openings 10 have been arranged symmetrically in the flange on a rotation circle.

In a method according to the invention, first the deflection curve of a tubular piece 1 intended for rotating, such as a roll of a paper machine, is typically defined. Thus, the balancing method according to the invention is based on measuring the dynamic deflection curve of the roll and a calculation of a balancing mass performed based on it. Naturally, required balancing masses and their positions may be defined by some other method known as such.

According to an advantageous embodiment, in the method, a tubular piece 1 intended for rotating, especially a roll, is rotated by a rotating device (not shown in figures), such as for example a balancing machine or a paper machine, with a suitable speed, and the longitudinal dynamic deflection curve of the roll is measured from a desired number of cross-sections. Typically, the roll 1 is rotated at least with two speeds, a first speed i.e. slow speed and a second speed i.e. run speed. The deflection curve of the roll 1 is typically measured from N cross-section points. Based on a measured deflection curve or a change of the deflection curve, a balancing/correction mass required for minimising the deflection-curve error of the roll is calculated. The balancing/correction mass is fastened inside the roll shell with a device according to the invention.

The invention thus relates to a method for balancing a tubular piece 1, such as a roll. In the method, the positions of a mass/masses required for balancing the piece to be balanced are typically defined with a method known as such. In an embodiment, the longitudinal dynamic deflection curve and/or the change of the deflection curve of the tubular piece is measured with a rotating device at least from one cross-section, the size of the correction/balancing mass for minimising the deflection-curve error is calculated based on the measured deflection curve. When the position and/or the size of the correction/balancing mass has been defined, the correction/balancing mass is fastened with a tightening connection on the internal surface of the shell part 3 of the tubular piece 1, and that an annular device 4, most suitably consisting of at least two parts, which is tightened on the inner circle of the shell part 3, is used as the correction/balancing mass and/or at least as its fastening device.

In the method, according to an advantageous embodiment, several annular fastening devices 4, 4', 4" of the correction/balancing mass are used. According to the method, parts 41, 42 of the annular device 4 may be fastened to each other inside the tubular piece 1. Then, the annular device 4 is moved to a correct longitudinal position inside the tubular piece 1 and tightened against the internal surface of the shell part 3 of the tubular piece 1.

Typically, the annular device 4 is moved to its place and tightened by means of a mounting means 11 from outside the tubular piece 1. The annular device 4 is tightened at least with one wedge member 46 against the internal surface of the shell part 3 of the tubular piece. The wedge member 46 affects the first part 41 and the second part 42 of the annular piece, whereby when tightening, a gap 49 between the first part 41 and the second part 42, principally in the direction of the circle, increases and the outer circle of the annular device 4 is pressed against the internal surface of the shell 3.

In the method, if required, at least one additional weight is mounted in the fastening points 5 of the annular device 4 by means of a mounting means 11 via at least one opening 10 located at the end of the tubular piece 1.

Thus, the invention also relates to a device to be used in balancing of a tubular piece. The device 4 is an annular device tightenable against the internal surface of the shell part of the tubular piece, that the device comprises at least one first part 41 and at least one second part 42, and means 43 for arranging the first part and the second part pivotedly to each other and a tightening means 46 by means of which the annular device may be adjustable between a first position, in which the circle of the annular device is at its first length, and a second position in which the circle of the annular device is at its second length.

The tightening means comprises at least one wedge member 46 which affects the abutting surfaces formed in the first part and the second part.

The tightening means comprises two wedge members 46, 46', the wedge parts of which are arranged to affect the parts 41, 42 of the annular device from opposite directions, and an adjusting means 48, advantageously a screw means, by turning of which the wedge members 46, 46' are arranged to move relative to each other. Support parts 44, 45 are arranged to the first part 41 and the second part 42 for keeping the tightening means 46, 46' in its place, at least when the device is mounted in the tubular piece.

The device 4 according to the invention is advantageously an annular device tightenable on the internal surface of the shell 3 of the roll 1 which device most advantageously consists of several parts. According to an advantageous embodiment, the annular device 4, i.e., the balancing ring, consists of at least two ring parts 41, 42 which are bent to an arch (a semiarch) substantially the size of the radius of the internal surface of the roll shell. The ring parts 41, 42 are connected to each other with a pivot means, for example, a hinge means 43. According to an embodiment, the hinge means consists of two tube parts and a pin part, such as a bolt, and a locking part of the pin part, such as a nut. A first part of the hinge means, in an embodiment a tube part, is fastened to the first ring part, and a second part, for example a second tube part, is fastened to the second ring part. The first and the second hinge part are then connected with the pin part and turnably relative to the pin part. From the opposite end in relation to the pivot means, the balancing ring is tightened against the internal surface of the roll shell with a tightening means. According to an embodiment, the tightening means is a wedge lock. The wedge lock consists of two wedge parts 46, 46', such as wedge-shaped plate parts, control plates 44, 45, the tightening and locking parts 47, 47', 48 of the wedge lock, such as a bolt and nuts (fastenings mechanically and by welding). The first wedge part has a support part 47 through which the bolt part 48 is set. The threaded part of the bolt part 48 is arranged to fit to a counterpart 47' located in the second wedge part 46'. Then, when rotating the bolt 48, the wedge parts move relative to each other.

The basic mass of the device consists of, for example, plate parts, such as metal plates, for example steel plates which are bent to the size of a desired radius, typically somewhat the same size as the radius of the inner circle of the shell of the tubular piece. To the balancing ring fastening parts, such as tube parts 5, are arranged, for example, by welding, at several, advantageously N, sectors for fastening adjusting weights. In an embodiment, the adjusting weight 12 is a wedge anchor which is tightened to the fastening part, such as a tube part. Fastening may be performed, for example, mechanically, such as with a nut and/or a fastening material, such as glue mass. According to an embodiment, the adjusting weight 12 is brought inside the roll shell via openings 10 made to the end of the roll, for example, with a mounting bar 11 by means of which it is also possible to perform fastening and/or tightening of the adjusting weight 12 in the fastening part.

Figure shows an embodiment in which there are arranged four groups of fastening parts 5 which are arranged at distances of 90 degrees on the inner circle of the device 4. It should be noted that the fastening parts may be arranged with a desired manner on the circle of the device. In some cases, the fastening parts 5 may function as such as additional weights without requiring adjusting weights 12.

It is well known by those skilled in the art that the different embodiments of the invention are not solely limited to the examples described above, and thus they may vary within the scope of the appended patent claims. Thus, the position and the size of the balancing mass may also be defined with other methods than the one based on a longitudinal deflection curve and/or its change. If required, the characteristic features possibly described in this specification along with other characteristic features may also be used separate from each other.

## Claims

1. A method for balancing a tubular piece (1), such as a roll, wherein a correction/balancing mass is fastened with a tightening connection on an internal surface of a shell part (3) of the tubular piece (1), and that an annular device (4), most suitably consisting of at least two parts which is tightened on the inner circle of the shell part (3), is used as the correction/balancing mass and/or at least as its fastening device, **characterised in that** the annular device (4) comprises at least one first part (41) and at least one second part (42), and means (43) for arranging the first part and the second part pivotally to each other and a tightening means (46) by means of which the annular device may be adjustable between a first position, in which the circle of the annular device is at its first length, and a second position in which the circle of the annular device is at its second length.

2. A method according to claim 1, **characterised in that** several annular fastening devices (4, 4', 4") of the correction/balancing mass are used.

3. A method according to claim 1 or 2, **characterised in that** the parts (41, 42) of the annular device (4) are fastened to each other inside the tubular piece (1) and that the annular device (4) is moved to a correct longitudinal position inside the tubular piece (1) and is tightened against the internal surface of the shell part (3) of the tubular piece (1).

4. A method according to any one of claims 1-3, **characterised in that** the annular device (4) is moved in its place and is tightened by means of a mounting means (11) from outside the tubular piece (1).

5. A method according to any one of claims 1-4, **characterised in that** the annular device (4) is tightened with at least one wedge member (46) against the internal surface of the shell part (3) of the tubular piece.

6. A method according to any one of claims 1-5, **characterised in that** the wedge member (46) affects a first part (41) and a second part (42) of the annular piece, whereby when tightening, a gap (49) between the first part (41) and the second part (42) increases and the outer circle of the annular device (4) is pressed against the internal surface of the shell (3).

7. A method according to any one of claims 1-6, **characterised in that** at least one additional weight is mounted in the fastening points (5) of the annular device (4) by means of a mounting means (11) via at least one opening (10) located at the end of the tubular piece (1).

8. A method according to any one of claims 1-7, **characterised in that**, in the method, a longitudinal dynamic deflection curve and/or the change of the deflection curve of the tubular piece is measured with a rotating device at least from one cross-section, the size of the correction/balancing mass for minimising a deflection-curve error is calculated based on the measured deflection curve.

9. A device to be used in balancing a tubular piece, **characterised in that** the device is an annular device tightenable against the internal surface of the shell part of the tubular piece, that the device comprises at least one first part (41) and at least one second part (42), and means (43) for arranging the first part and the second part pivotally to each other and a tightening means (46) by means of which the annular device may be adjustable between a first position, in which the circle of the annular device is at its first length, and a second position in which the circle of the annular device is at its second length.

10. A device according to claim 9, **characterised in that** the tightening means comprises at least one wedge member (46) which affects the abutting surfaces formed in the first part and the second part.

11. A device according to claim 9 or 10, **characterised in that** the tightening means comprises two wedge members (46, 46'), the wedge parts of which are arranged to affect the parts (41, 42) of the annular device from opposite directions, and an adjusting means (48), advantageously a screw means, by turning of which the wedge members (46, 46') are arranged to move relative to each other.

12. A device according to any one of claims 9-11, **characterised in that** support parts (44, 45) are arranged to the first part (41) and the second part (42) for keeping the tightening means (46, 46') in its place, at least when the device is mounted in the tubular piece.

13. A device according to any one of claims 9-12, **characterised in that** fastening members (5) for additional weights are arranged to the first part (41) and/or the second part (42).

14. A device according to claim 13, **characterised in that** the fastening means (5) of the additional weights are tubular.

15. A device according to any one of claims 9-14, **characterised in that** the tightening means comprises a first wedge member (46) and a second wedge member (46') and an adjusting means (48) which is arranged to affect counterparts (47, 47') formed in the wedge members and that abutting surfaces are formed to the first part (41) and the second part (42) in which the wedge surfaces of the wedge members are arranged to affect.

## Patentansprüche

1. Verfahren zum Auswuchten eines rohrförmigen Stücks (1), wie zum Beispiel einer Walze, wobei eine Korrektur-/Auswuchtmasse mit einer Spannverbindung auf einer Innenoberfläche eines Mantelteils (3) des rohrförmigen Stücks (1) befestigt wird, und dass eine ringförmige Vorrichtung (4) am geeignetsten aus mindestens zwei Teilen besteht, **dadurch gekennzeichnet, dass** die ringförmige Vorrichtung (4), die auf einem Innenkreis des Mantelteils (3) gespannt wird, als die Korrektur-/Auswuchtmasse und/oder mindestens als deren Befestigungsvorrichtung verwendet wird, mindestens ein erstes Teil (41) und mindestens ein zweites Teil (42) sowie Mittel (43) zum Anordnen des ersten Teils und des zweiten Teils verschwenkbar zueinander, und ein Spannmittel (46) umfasst, mittels dessen die ringförmige Vorrichtung zwischen einer ersten Position, in der der Kreis der ringförmigen Vorrichtung seine erste Länge hat, und einer zweiten Position, in der der Kreis der ringförmigen Vorrichtung seine zweite Länge hat, verstellbar ist.

2. Verfahren nach Anspruch 1, **dadurch gekennzeichnet, dass** mehrere ringförmige Befestigungsvorrichtungen (4, 4', 4") der Korrektur-/Auswuchtmasse verwendet werden.

3. Verfahren nach Anspruch 1 oder 2, **dadurch gekennzeichnet, dass** die Teile (41, 42) der ringförmigen Vorrichtung (4) innerhalb des rohrförmigen Stücks (1) aneinander befestigt sind, und dass die ringförmige Vorrichtung (4) in eine korrekte Längsposition innerhalb des rohrförmigen Stücks (1) bewegt und gegen die Innenoberfläche des Mantelteils (3) des rohrförmigen Stücks (1) gespannt wird.

4. Verfahren nach einem der Ansprüche 1 bis 3, **dadurch gekennzeichnet, dass** die ringförmige Vorrichtung (4) an ihren Ort bewegt wird und mittels eines Anbringungsmittels (11) von außerhalb des rohrförmigen Stücks (1) gespannt wird.

5. Verfahren nach einem der Ansprüche 1 bis 4, **dadurch gekennzeichnet, dass** die ringförmige Vorrichtung (4) mit mindestens einem Keilelement (46) gegen die Innenoberfläche des Mantelteils (3) des rohrförmigen Stücks gespannt wird.

6. Verfahren nach einem der Ansprüche 1 bis 5, **dadurch gekennzeichnet, dass** sich das Keilelement (46) auf einen ersten Teil (41) und einen zweiten Teil (42) des ringförmigen Stücks auswirkt, wodurch bei einem Spannen ein Spalt (49) zwischen dem ersten Teil (41) und dem zweiten Teil (42) vergrößert und der äußere Kreis der ringförmigen Vorrichtung (4) gegen die Innenoberfläche des Mantels (3) gedrückt wird.

7. Verfahren nach einem der Ansprüche 1 bis 6, **dadurch gekennzeichnet, dass** mindestens ein zusätzliches Gewicht in den Befestigungspunkten (5) der ringförmigen Vorrichtung (4) mittels eines Anbringungsmittels (11) über mindestens eine Öffnung (10), die an dem Ende des rohrförmigen Stücks (1) angeordnet ist, angebracht wird.

8. Verfahren nach einem der Ansprüche 1 bis 7, **dadurch gekennzeichnet, dass** in dem Verfahren eine Längsdynamikauslenkungskurve und/oder die Änderung der Auslenkungskurve des rohrförmigen Stücks mit einer sich drehenden Vorrichtung mindestens von einem Querschnitt gemessen wird, die Größe der Korrektur-/Auswuchtmasse zum Minimieren eines Auslenkungskurvenfehlers auf der Grundlage der gemessenen Auslenkungskurve berechnet wird.

9. Vorrichtung zur Verwendung beim Auswuchten eines rohrförmigen Stücks, **dadurch gekennzeichnet, dass** die Vorrichtung eine ringförmige Vorrichtung ist, die gegen die Innenoberfläche des Mantelteils des rohrförmigen Stücks gespannt werden kann, dass die Vorrichtung mindestens ein erstes Teil (41) und mindestens ein zweites Teil (42) sowie Mittel (43) zum Anordnen des ersten und des zweiten Teils verschwenkbar zueinander und ein Spannmittel (46) umfasst, mittels dessen die ringförmige Vorrichtung zwischen einer ersten Position, in der der Kreis der ringförmigen Vorrichtung seine erste Länge hat, und einer zweiten Position, in der der Kreis der ringförmigen Vorrichtung sein zweite Länge hat, einstellbar sein kann.

10. Vorrichtung nach Anspruch 9, **dadurch gekennzeichnet, dass** das Spannmittel mindestens ein Keilelement (46) umfasst, das sich auf die Anlageflächen auswirkt, die in dem ersten Teil und dem zweiten Teil ausgebildet sind.

11. Vorrichtung nach Anspruch 9 oder 10, **dadurch gekennzeichnet, dass** die Spannmittel zwei Keilelemente (46, 46'), deren Keilteile so angeordnet sind, dass sie sich auf die Teile (41, 42) der ringförmigen Vorrichtung von entgegengesetzten Richtungen auswirken, sowie ein Einstellmittel (48), vorteilhafterweise ein Schraubmittel, umfassen, durch dessen Drehung die Keilelemente (46, 46') zur Bewegung relativ zueinander angeordnet sind.

12. Vorrichtung nach einem der Ansprüche 9 bis 11, **dadurch gekennzeichnet, dass** Stützteile (44, 45) am ersten Teil (41) und am zweiten Teil (42) angeordnet sind, um das Spannmittel (46, 46') an seinem Ort zu halten, mindestens wenn die Vorrichtung in dem rohrförmigen Stück angebracht ist.

13. Vorrichtung nach einem der Ansprüche 9 bis 12, **dadurch gekennzeichnet, dass** Befestigungselemente (5) für zusätzliche Gewichte am ersten Teil (41) und/oder am zweiten Teil (42) angeordnet sind.

14. Vorrichtung nach Anspruch 13, **dadurch gekennzeichnet, dass** die Befestigungsmittel (5) der zusätzlichen Gewichte rohrförmig sind.

15. Vorrichtung nach einem der Ansprüche 9 bis 14, **dadurch gekennzeichnet, dass** das Spannmittel ein erstes Keilelement (46) und ein zweites Keilelement (46') sowie ein Einstellmittel (48) umfasst, das dazu angeordnet ist, sich auf Gegenstücke (47, 47') auszuwirken, die in den Keilelementen ausgebildet sind, und dass Anlageflächen am ersten Teil (41) und am zweiten Teil (42) ausgebildet sind, in denen die Keilflächen der Keilelemente angeordnet sind, um sich auf diese auszuwirken.

## Revendications

1. Procédé pour équilibrer une pièce tubulaire (1) tel qu'un rouleau, dans lequel une masse de correction / équilibrage est fixée avec un raccordement de serrage sur une surface interne d'une partie de coque (3) de la pièce tubulaire (1), et dans lequel un dispositif annulaire (4), se composant de la manière la plus appropriée d'au moins deux parties, qui est fixée sur le cercle interne de la partie de coque (3), est utilisé en tant que masse de correction / équilibrage et/ou au moins en tant que son dispositif de fixation, **caractérisé en ce que** le dispositif annulaire (4) comprend au moins une première partie (41) et au moins une seconde partie (42), et des moyens (43) pour agencer la première partie et la seconde partie de manière pivotante l'une par rapport à l'autre et des moyens de resserrage (46) au moyen desquels le dispositif annulaire peut être ajustable entre une première position dans laquelle le cercle du dispositif annulaire est à sa première longueur, et une seconde position dans laquelle le cercle du dispositif annulaire est à sa seconde longueur.

2. Procédé selon la revendication 1, **caractérisé en ce que** plusieurs dispositifs annulaires (4, 4', 4") de la masse de correction / équilibrage sont utilisés.

3. Procédé selon la revendication 1 ou 2, **caractérisé en ce que** les parties (41, 42) du dispositif annulaire (4) sont fixées entre elles à l'intérieur de la pièce tubulaire (1) et **en ce que** le dispositif annulaire (4) est déplacé dans une position longitudinale correcte à l'intérieur de la pièce tubulaire (1) et est bloqué contre la surface interne de la partie de coque (3) de la pièce tubulaire (1).

4. Procédé selon l'une quelconque des revendications 1 à 3, **caractérisé en ce que** le dispositif annulaire (4) est déplacé dans sa place et est resserré au moyen d'un moyen de montage (11) depuis l'extérieur de la pièce tubulaire (1).

5. Procédé selon l'une quelconque des revendications 1 à 4, **caractérisé en ce que** le dispositif annulaire (4) est resserré avec au moins un élément de cale (46) contre la surface interne de la partie de coque (3) de la pièce tubulaire.

6. Procédé selon l'une quelconque des revendications 1 à 5, **caractérisé en ce que** l'élément de cale (46) affecte une première partie (41) et une seconde partie (42) de la pièce annulaire, moyennant quoi lors du resserrage, un espace (49) entre la première partie (41) et la seconde partie (42) augmente et le cercle externe du dispositif annulaire (4) est comprimé contre la surface interne de la coque (3).

7. Procédé selon l'une quelconque des revendications 1 à 6, **caractérisé en ce qu'**au moins un poids supplémentaire est monté dans les points de fixation (5) du dispositif annulaire (4) au moyen d'un moyen de montage (11) via au moins une ouverture (10) située à l'extrémité de la pièce tubulaire (1).

8. Procédé selon l'une quelconque des revendications 1 à 7, **caractérisé en ce que**, dans le procédé, une courbe de déflexion dynamique longitudinale et/ ou le changement de la courbe de déflexion de la pièce tubulaire est mesuré avec un dispositif rotatif au moins à partir d'une section transversale, la taille de la masse de correction / équilibrage pour minimiser une erreur de courbe de déflexion est calculée en fonction de la courbe de déflexion mesurée.

9. Dispositif destiné à être utilisé pour équilibrer une pièce tubulaire, **caractérisé en ce que** le dispositif est un dispositif annulaire pouvant être resserré contre la surface interne de la partie de coque de la pièce tubulaire, **en ce que** le dispositif comprend au moins une première partie (41) et au moins une seconde partie (42), et des moyens (43) pour agencer la première partie et la seconde partie de manière pivotante l'une par rapport à l'autre et des moyens de resserrage (46) au moyen desquels le dispositif annulaire peut être ajustable entre une première position dans laquelle le cercle du dispositif annulaire est à sa première longueur, et une seconde position dans laquelle le cercle du dispositif annulaire est à sa seconde longueur.

10. Dispositif selon la revendication 9, **caractérisé en ce que** les moyens de resserrage comprennent au moins un élément de cale (46) qui affecte les surfaces de butée formées dans la première partie et dans la seconde partie.

11. Dispositif selon la revendication 9 ou 10, **caractérisé en ce que** les moyens de resserrage comprennent deux éléments de cale (46, 46'), dont les parties de cale sont agencées pour affecter des parties (41, 42) du dispositif annulaire à partir des directions opposées, et les moyens d'ajustement (48), avantageusement des moyens de vis, par la rotation desquelles les éléments de cale (46, 46') sont agencés pour se déplacer les uns par rapport aux autres.

12. Dispositif selon l'une quelconque des revendications 9 à 11, **caractérisé en ce que** des parties de support (44, 45) sont agencées sur la première partie (41) et la seconde partie (42) pour maintenir les moyens de resserrage (46, 46') dans leur place, au moins lorsque le dispositif est monté dans la pièce tubulaire.

13. Dispositif selon l'une quelconque des revendications 9 à 12, **caractérisé en ce que** les éléments de fixation (5) pour les poids supplémentaires, sont agencés sur la première partie (41) et/ou la seconde partie (42).

14. Dispositif selon la revendication 13, **caractérisé en ce que** les moyens de fixation (5) des poids supplémentaires sont tubulaires.

15. Dispositif selon l'une quelconque des revendications 9 à 14, **caractérisé en ce que** les moyens de resserrage comprennent un premier élément de cale (46) et un second élément de cale (46') et des moyens d'ajustement (48) qui sont agencés pour affecter des contreparties (47, 47') formées dans les éléments de cale et **en ce que** les surfaces sont formées sur la première partie (41) et la seconde partie (42) dans lesquelles les surfaces de cale des éléments de cale sont agencées pour les affecter.
